# EUROPEAN PATENT APPLICATION

(11) **EP 1 825 996 A1**
(43) Date of publication of application: **29.08.2007**
(21) Application number: 07003785.8
(22) Date of filing: 23.02.2007
(51) Int. Cl.: B32B 27/00, B29D 31/518, A43B 13/12, A43B 23/02

(54) **Compression molded footwear and methods of manufacture**

(30) Priority: 24.02.2006 US 362248
(71) Applicant: The Timberland Company, Stratham, NH 03885 (US)
(72) Inventor: Vattes, David, Londonderry, NH 03053 (US); Dillon, Peter, Topsfield, MA 01983 (US)
(74) Representative: Maiwald Patentanwalts GmbH

(57) **Abstract**

An article of footwear having an upper, which includes a first foam layer having a first surface and a second surface remote from the first surface, a second foam layer having a first surface and a second surface remote from the first surface, and a middle layer having a first surface and a second surface remote from the first surface. The first surface of the middle layer is affixed to the second surface of the first foam layer, and the second surface of the middle layer is affixed to the first surface of the second foam layer. The upper defines at least a portion of a foot receiving cavity for the article of footwear.

## Description

### BACKGROUND OF THE INVENTION

The present invention relates generally to articles of footwear and, more particularly, to articles of footwear having multilayer molded uppers.

Typically, many types of footwear are made by what is known as a cut and sew method, in which individual pieces of material are cut out and sewn together to form the three dimensional ("3-D") shape of a footwear upper. In such a process, individual pieces of material are cut out according to a pattern, in which individual pieces are designated to form specified portions of the shoe upper. When the pieces are cut out, they are typically marked according to the portion of the upper which they are intended to form. The individual pieces are bonded, stitched and then lasted, giving the shoe the necessary 3-D shape. Other portions of the shoe may then be attached to the upper, such as an outsole, midsole, footbed, etc.

Such a method requires a large number of steps, each requiring a skilled person for completion thereof. This increases the overall manufacturing cost and can lead to throughput problems arising from bottlenecks in one step of the process. For example, the absence of the person responsible for one step in the process can shut down an entire production line of footwear. Furthermore, the use of such complicated individual pieces leads to a product that is more difficult to design, requiring the design of both the individual pieces and how the pieces will fit together to form the shape of the shoe upper. This further contributes to increased costs of the finished product, and increases lead time when designing the shoe.

Alternative methods of shoe production have been developed which use various molding techniques to create the shoe upper. Such methods generally use a type of thermoformable polymeric material, such as plastic, to create individual parts of the shoe upper or the upper as a whole. One such method includes injection molding of a thermoplastic into a non-planar 3-D mold to form the shape of the shoe upper. This decreases the time needed to form the shoe. However, the injection molding method presents significant additional problems. Specifically, the complicated molds necessary to form the 3-D shape of a shoe upper increase costs and lead time due to the time required to manufacture these molds. Furthermore, although molding creates advantages such as faster forming of the basic shape of the shoe upper, such benefits can be outweighed by the fact that additional process steps must be performed after molding of the shoe in order to control material creep. Creep is when the foaming reaction to heat energy continues causing expansion of the foam material. If not controlled, creep can result in continued expansion of the polymer. This causes the shoe upper to stretch, which affects the fit quality of the shoe. Additionally, because the majority of the shoe upper is formed in a single process step, there are no available intermediate steps that can control factory defects in the upper of the shoe. Such defects typically arise due to the difficulty in controlling the expansion of foam after injection into the mold, particularly during cooling. In order to control such defects, tolerances within the molds need to be widened, which can lead to overall fit problems with the finished product.

An alternative method includes forming a 3-D footwear upper by compression molding a sheet of material, including a layer of thermoplastic polyurethane (TPU) having a predetermined thickness, into a 3-D form. However, this method does not alleviate the expense required by complex 3-D molds or the increased product lead time associated therewith. In addition to being able to control expansion of the polymer during molding, this method allows additional materials to be added to shoe upper during formation thereof, which helps to control creep and stretching of the product. This is typically accomplished by interposing between two moldable, thermoplastic layers, a fabric or other suitable material that possess appropriate tensile properties.

Limitations in such a process arise, particularly from the materials, namely TPU, that are used in the 3-D compression molding. Such materials are often somewhat thick or dense, resulting in shoe uppers that are too rigid or inflexible for practical purposes of footwear. The relative weight of TPU can also make it less desirable for use in a shoe upper. For example, the specific gravity of TPU can be approximately 1.0 to 1.1 where other materials, such as EVA foam, can be up to five times lighter. Additionally, footwear made from material including TPU retains heat and can make the foot hot, causing discomfort to the wearer.

Additionally, it is difficult to mold a 3-D shape from a single sheet of material having both thermoplastic and fabric materials, fabric not being thermoplastic. This causes difficulty in molding the complex 3-D shape of the shoe upper because thermoplastic and non-thermoplastic materials conform to the mold differently. This can tend to separate the materials during forming. All of the materials to be molded in such a process must possess thermoformable properties. The use of non-thermoformable materials can cause problems in the overall integrity of the product or the reliability of the process, leading to increased factory defects from the difficulty to control the molding process. Additionally, compression molding of a 3-D form from a flat substrate of material can lead to thinning of certain layers of the material during formation because the material must stretch to conform to the mold. This can weaken the overall material or diminish the foot protective properties of the materials used to form the upper. It also limits the ability of the shoe to be formed with decorative or protective features on the shoe upper. Stretching can also make it difficult to control the overall compression of the foam, which is desirous in compression molding because compression helps to bond the layers of material together.

Therefore, it is necessary to provide footwear uppers that possess the advantages of foam, particularly with respect to protection of the foot, durability, and other such properties, while providing a shoe with acceptable flexibility and ease of manufacture. Additionally, with the use of foam and compression molding process, there is a reduction in manufacturing cost, an increase in versatility of design and an increase in the number of various materials which may be used. The shoe, particularly the upper should be structured to utilize the desired properties of foam while minimizing creep and stretching in an effective manner, or to provide other additional beneficial properties to the foam material from which the upper is constructed. It is further desirous to provide a shoe upper that has features formed thereon, but which may be formed from an otherwise planar piece of material. Such features can provide an enhanced, more secure fit to the amorphous shape of the foot and/or provide additional protection. It is also desirous to provide a method for making such footwear that can be carried out in a limited number of process steps while compensating for defects that may arise during other molding processes. Such a method should utilize materials and methods already employed in the art. It is further desired to provide a method for manufacturing such footwear that eliminates the need for complex 3-D molds, while taking advantage of the benefits present in compression molded products.

### SUMMARY OF THE INVENTION

The present invention relates to an article of footwear having an upper which includes a first foam layer having a first surface and a second surface remote from the first surface, a second foam layer having a first surface and a second surface remote from the first surface, and a middle layer having a first surface and a second surface remote from the first surface. The first surface of the middle layer is affixed to the second surface of the first foam layer, and the second surface of the middle layer is affixed to the first surface of the second foam layer. The upper defines at least a portion of a foot receiving cavity for the article of footwear.

Preferably, at least one of the first and second foam layers of the upper is made from an open-cell foam. Additionally, least one of the first and second foam layers preferably comprises a thermoformable foam, which can include either a termoset foam or a thermoplastic foam. A thermoplastic foam used in the article of footwear may be an EVA foam.

In an upper according to an embodiment of the present invention the first foam layer further includes a feature affixed to the first surface thereof. The feature may be in the form of a protective feature located in, for example, the toe region of the upper. Alternatively, the feature can be a supportive feature located in, for example, the ankle region of the upper. The feature is preferably integrally formed with the first foam layer or the second foam layer. In an alternative embodiment, the feature comprises a coating applied to at least a portion of the first surface of the first foam layer. Such a coating can comprise a latex paint or a lacquer.

In one embodiment of the present invention, the first foam layer, the second foam layer, and the middle layer form a unitary piece of layered material having a first seam and a second seam. The unitary piece of layered material may define a first substantially seamless portion on a medial side of the upper between the first seam and the second seam. The upper may further define a second substantially seamless portion on a lateral side of the upper between the first seam and the second seam. In a preferred embodiment, the first seam is positioned at the heal section of the upper, and the second seam is positioned at the toe section of the upper.

An alternative embodiment of the present invention relates to an article of footwear having a sole and a unitary upper that is formed of a layered material and affixed to the sole. The layered material has a first foam layer, a second foam layer, and a middle layer interposed between the first and second foam layers. The upper defines at least a portion of a foot-receiving cavity of the article of footwear. Preferably, the middle layer is adhesively affixed between the first and second foam layers. The middle layer is preferably a mesh textile material.

It is preferred that the first and second foam layers each comprise a thermoformable foam. Preferably, the thermoformable foam is a thermoplastic foam, and, more preferably, thermoplastic foam is an EVA foam. The EVA foam may comprise an open-cell foam. Alternatively, the thermoformable foam may comprise a polyester, a polyether or a latex foam.

A further embodiment of the present invention relates to a method for making an article of footwear. The method includes providing a first foam layer, a second foam layer and a middle layer, and integrally forming the first foam layer, the second foam layer and the middle layer by interposing the middle layer between the first foam layer and the second foam layer to form a blank defining a profile having first and second mating portions. The method further includes forming an upper defining a portion of a foot receiving cavity from the blank by aligning the first and second mating portions. Integrally forming the first foam layer, second foam layer and middle layer may include compression molding the first and second foam layers and the middle layer together. A first seam can be formed from the first mating portion, and a second seam can be formed from the second mating portion.

In the method according to the present embodiment of the invention, the compression molding may include the use of a mold. The mold can further be used to form a sole for the article of footwear concurrently with the integral forming of the first foam layer, second foam layer and middle layer. Preferably, integrally forming the first foam layer, second foam layer and middle layer further includes adhesively affixing the middle layer between the first foam layer and the second foam layer. In an alternative embodiment, integrally forming the first foam layer, second foam layer and middle layer may include cold molding of the first and second foam layers and the middle layer. Cold molding can be carried out using rollers or plates which may be substantially flat. The method of the present embodiment can further include trimming the layered material after molding thereof. In a further embodiment of the present invention, the method includes applying a coating to the first surface of the first foam layer after compression molding thereof.

Additionally, the method of the present embodiment may further include affixing an insole to the upper at an outside edge thereof so as to define a foot receiving cavity therebetween. A last may then be inserted into the foot receiving cavity of the article of footwear. The upper may then be reheated so as to form the upper to the shape of the last. The upper may then be allowed to cool and the last can be removed from the foot receiving cavity.

A further embodiment of the present invention relates to an article of footwear having a unitary upper and a sole. The upper is formed from a layered material, forms at least a portion of a foot receiving cavity of the article of footwear, and is affixed to the upper. The article of footwear of the present embodiment is formed by the process of providing a first foam layer, a second foam layer and a middle layer and integrally forming the first foam layer, the second foam layer and the middle layer by interposing the middle layer between the first foam layer and the second foam layer to form a blank. The blank preferably defines a profile having first and second mating portions. An upper is formed from the blank by forming first and second seams from the first and second mating portions. The sole is then affixed to the upper.

In a preferred embodiment the first foam layer, second foam layer and middle layer are integrally formed by compression molding. Additionally, the step of integrally forming may include adhesively affixing the middle layer between the first foam layer and the second foam layer. The adhesive used in the step of integrally forming is preferably heat activated. In a further embodiment, the middle layer is formed of a textile material defining a plurality of open portions such that the step of compression molding forces the first foam layer and the second foam layer into mutual contact within the open portions so as provide tensile strength to the layered material.

An additional embodiment of the present invention relates to an article of footwear comprising a sole, and a unitary upper affixed to the sole so as to define a foot receiving cavity therein. The unitary upper is formed of a layered material consisting essentially of a first layer of a thermoformable foam having a first surface and a second surface remote from the first surface thereof, and a second layer having a first surface and a second surface remote from the first surface thereof. The second surface of the first layer is affixed to the first surface of the second layer. The upper defines at least a portion of a foot-receiving cavity. The second layer may be formed from a textile material.

The first surface of the first layer may be disposed toward the foot receiving cavity such that the second surface of the second layer is spaced apart from the foot receiving cavity. Further, the first layer may include a feature affixed to the first surface thereof, which may be integrally formed with the first foam layer.

An alternative embodiment of the present invention relates to an article of footwear including an upper and a bottom affixed to the upper, wherein the upper and the bottom are formed from a unitary piece of layered material. The layered material includes a first layer of thermoformable foam having a first surface and a second surface remote from the first surface thereof and a second layer having a first surface and a second surface remote from the first surface thereof. The second surface of the first layer is affixed to the first surface of the second layer. The second layer may include a first region and a second region, the first region comprising a first material and the second region comprising a second material. The first material may be a rubber and the second material may be a textile.

### BRIEF DESCRIPTION OF THE DRAWINGS

The present invention will be better understood on reading the following detailed description of non-limiting embodiments thereof, and on examining the accompanying drawings, in which:

FIG. 1 is a perspective view of a shoe according to an embodiment of the present invention;

FIG. 2 is a cross-section of a footwear upper according to an embodiment of the present invention;

FIG. 3 is a cross-section of a layered material according to an embodiment of the present invention;

FIG. 4 is a perspective view of materials which may be used in forming a footwear upper according to one embodiment of the present invention;

FIG. 5 shows an example of a shoe blank according to one embodiment of the present invention and an example of a mold that can be used to form a desired shape for materials according to one embodiment of the present invention;

FIG. 6 shows a compression molded shoe blank according to one embodiment of the invention;

FIG. 7 shows a step in the assembly of a footwear upper according to one embodiment of the present invention;

FIG. 8 is an assembly view of a shoe according to one embodiment of the present invention; and

FIG. 9 is a flow chart illustrating a method of making a shoe according to an embodiment of the present invention;

FIG. 10 shows an example of a shoe upper according to an alternative embodiment of the present invention; and

FIG. 11 shows an example of a shoe upper according to an alternative embodiment of the present invention.

### DETAILED DESCRIPTION

In describing the preferred embodiments of the subject matter illustrated and to be described with respect to drawings, specific terminology will be employed for the sake of clarity. However, the invention is not intended to be limited to the specific terms so selected, and it is to be understood that each specific term includes all technical equivalents which operate in a similar manner to accomplish a similar purpose.

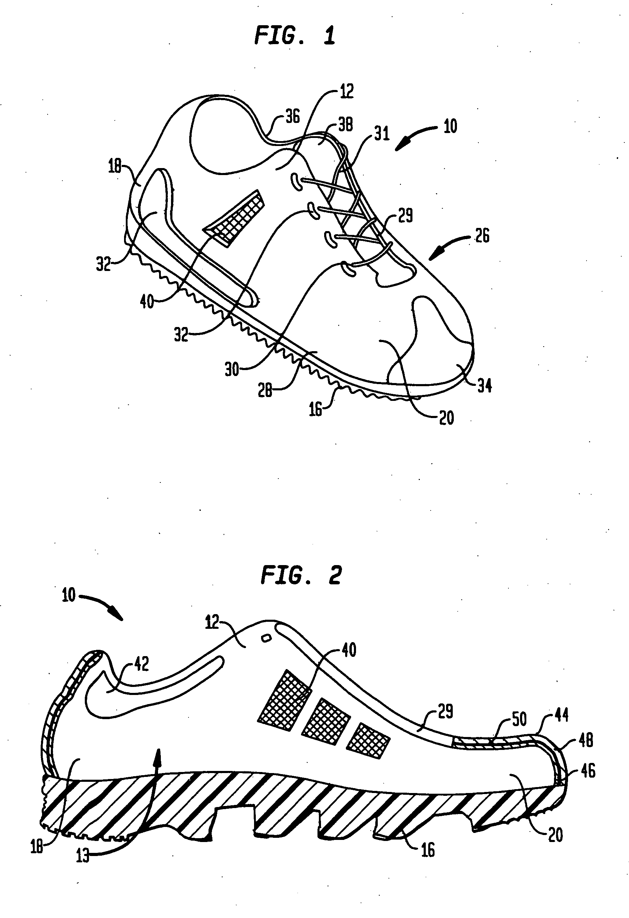

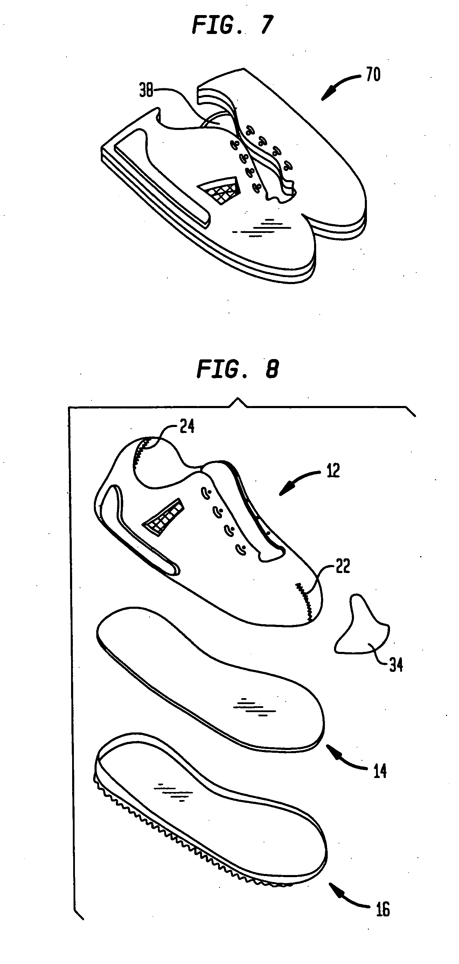

Referring to the drawings, wherein like reference numerals represent like elements, there is shown in FIG. 1, in accordance with one embodiment of the present invention, a shoe designated generally by reference numeral 10. Shoe 10 is generally constructed of an upper 12, an insole 14 (*see* FIG. 8), and an outsole 16. Upper 12 is designed to receive the foot of a wearer by defining a portion of foot receiving cavity 13 therein. The bottom portion of foot receiving cavity 13 is defined by insole 14, which is generally structured to support the foot of the wearer of shoe 10. Outsole 16 is structured to provide further support for the foot of the wearer and makes contact with the ground underneath shoe 10. Additionally, outsole 16 provides cushioning and traction for the wearer. Although the particular shoe 10 illustrated is in the form of an athletic or hiking shoe, those having reasonable skill in the art will understand that the invention described herein can be applied to other types of footwear, including dress shoes, sandals or any other type of footwear.

Upper 12 is structured to securely hold the foot of a wearer and, to the extent possible, maintain the foot in contact with insole 14. Upper 12 is also preferably designed to provide support for the foot and to protect the foot from injury. Preferably, upper 12 covers the metatarsal and toe region of the foot as well as the instep portion and the heel portion of the foot. Optionally, upper 12 extends over the ankle of the wearer, providing support and protection thereto. Accordingly, upper 12 includes sections that correspond to the areas of the foot. These areas include the toe portion 20, the instep portion 25 and the heel portion 22. Instep portion 25 is further divided into medial 26 and lateral 28 portions, respectively. As discussed above, in typical shoe construction the individual portions of the shoe are generally formed from one or more separate, cut-out pieces of material per section. For example, medial and lateral portions 26, 28 of instep portion 25 are typically formed from quarter panels. Such a construction, results in the typical shoe upper being composed of numerous parts that are sewn and/or glued together.

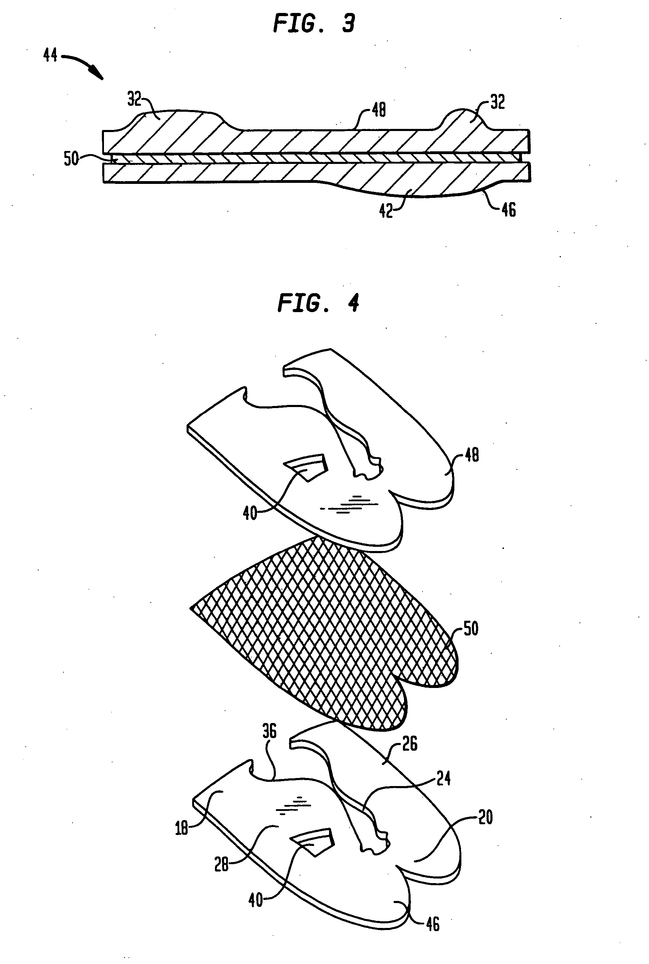

Referring now to FIG. 4, upper 12 according to aspects of the present invention is shown as being constructed of fewer individual pieces of material than a typical shoe. Upper 12 according to one embodiment of the present invention is desirably made from a single unitary piece of material, which may be generally planar prior to the molding process. However, the advantages of such a shoe construction could be realized by a shoe formed from two or more pieces of material.

Upper 12 is desirably made from a layered material 44. As shown in FIGS. 2 and 3, layered material 44 preferably includes three separate layers, including a first layer 46, a second layer 48, and a middle layer 50. When layered material 44 is assembled into the form of upper 12, first layer 46 faces the innermost part of foot receiving cavity 13, while second layer 48 is remote from first layer 46 in a direction away from the foot receiving cavity 13. The separate layers are preferably integrally formed into the unitary layered material 44 by subjecting the layers to a compression molding process, as will be discussed in detail below. First layer 46 and second layer 48 are preferably formed from a foam material, and more preferably an open-cell foam; however, the foam may be either open or closed cell. The use of foam in connection with upper 12 provides basic protection for the foot, over non-foam materials such as TPU, by having air cells embedded therein to provide cushioning characteristics that can help attenuate forces that are applied to the outside of the shoe. This can serve as injury protection for blunt force trauma that might cause bruising or other injury.

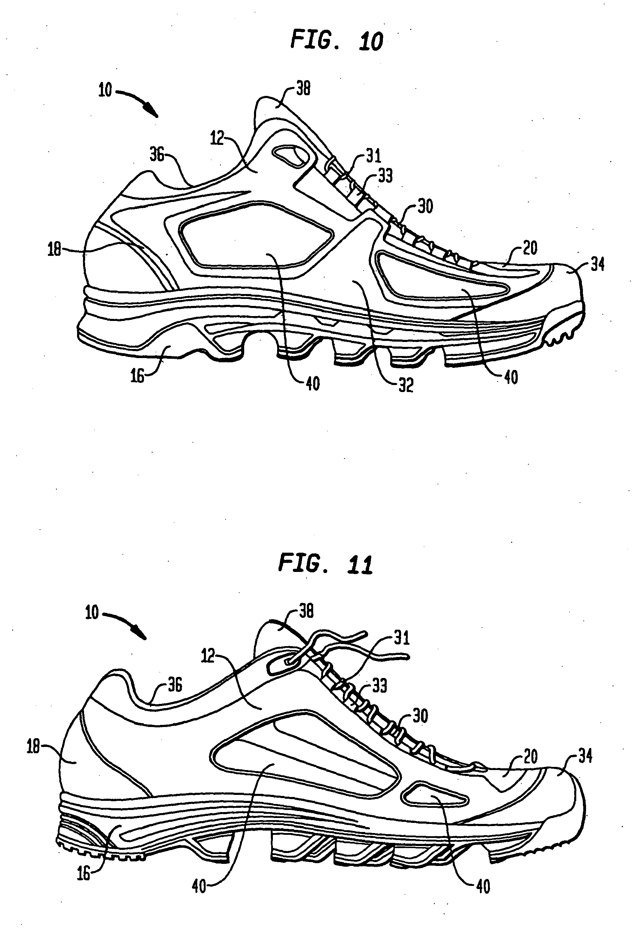

Preferably, a foam having thermoformable properties is selected so that the foam is compatible with compression molding to form layered material 44. Desired thermoformable properties include both thermoset and thermoplastic properties as are understood in the art. Such a foam may preferably be formed form a sheet stock foam, which is understood in the art to include rolled goods, having thermoformable properties. Thermoformable foams can be molded into various shapes using compression molding. Features may also be incorporated into the layered material 44, which is otherwise generally planar in form. As shown in FIGS. 1 and 3, upper 12 can include a number of such features 32, which can be protective, decorative, and can provide enhanced foot security. Protective features may provide additional cushioning to desired areas of the foot, while decorative features are designed simply to enhance the aesthetic appeal of the shoe. An alternative to forming features 32 during compression molding includes providing features in the stock sheet of foam from which second layer 48 or first layer 46 is formed. As shown in FIG. 3, features 32 may be formed by providing a layer of foam that is thicker in the area of the feature 32 than other areas of the upper. The use of EVA foam when making an upper 12 having such features 32 is particularly advantageous because of the cushioning properties and thermoformable properties which EVA possess. Protective features 32 are particularly useful, for example, along the lateral side 28 and medial side of the foot as well as on the heel section 18 for, e.g., ankle protection, or toe section 20 of the upper 12. Additional structurally protective elements 32 can be provided around eyelets 30 which provide protection for the laces 31 which pass through eyelets 30. This protects laces 31 from abrasion or tearing during use due to objects that may be encountered in the environment in which the shoes are used. This also can protect the upper from stretching or tearing. Furthermore, according to an alternative embodiment of the present invention shown in FIGS. 10 and 11, eyelets can be formed as loops 33 attached to upper 12 extending into eyestay 29. Loops 33 can be affixed to upper 12 during compression molding, or can be affixed after compression molding by stitching, by using adhesive or by other bonding processes.

Similarly, as shown in FIG. 3, features 32 can be formed on the first layer 46 of upper 12. While exterior features 32 are generally formed to provide protection or decorative designs, interior features 32 may be added to one or more sections of the upper 12 to provide a more comfortable or secure fit for the foot within upper 12 by more closely matching the shape of the shoe interior to that of the foot. By way of example, such interior features could be placed on the inside of the arch region of the foot or in the ankle region. Additional features and placement thereof would be reasonably understood by those having skill in the art. Such features 32 may be strategically placed on areas of the upper 12 to provide the desired function thereof, e.g., protection or decoration, without affecting the desired properties of the shoe, such as flexibility or breathability.

In addition to having thermoformable properties, the foam(s) used in the layered material 44 is preferably hydrolytically stable and does not absorb or breakdown in the presence of water. Additionally, the foam(s) selected should be lightweight, e.g., having a specific gravity of about 0.20 or less than 0.50. Preferably, the specific gravity is between 0.15 and 0.30, and more preferably, between 0.20 and 0.25. Most preferably, the foam(s) selected has a specific gravity of about 0.22. EVA foam is particularly suitable for first 46 and second 48 layers of layered material 44 because it falls within such parameters. Other materials that can be used for first 46 and second 48 layers include polyester, polyether and latex. Polyester and polyether are useful due to their stability in the presence of water. TPU is not suitable for the layers at the layered material 44 according to the present invention because it holds in heat, may discolor in the presence of water, can take permanent length if stretched, and, is generally less flexible than thermoformable foams.

It is not necessary that first layer 46 and second layer 48 be composed of the same material. In one particular embodiment of shoe 10, first layer 46 and second layer 48 may be formed of different materials, or the same material having different properties, such as specific gravity or durometer, in order to provide specified features for each of these layers, such as insulation for warmth, breathability, protection of the foot, rigidity and/or flexibility, pressure distribution and comfort. Selection of such properties will be understood by those having reasonable skill in the art. Further, each of the layers 46, 48 may be formed of one or more layers of material, which may have different properties, e.g., insulation, breathability, protection, durability, rigidity, flexibility, color, etc.

Middle layer 50 is interposed between first layer 46 and second layer 48. Middle layer 50 may be selected in order to lend an additional property to layered material 44, such as breathability, waterproofing, and/or tensile support. Generally, the types of foams used to form first layer 46 and second layer 48 have a low modulus of elasticity, such that they are susceptible to migration, tearing, or stretching while in use. The materials in a shoe upper are generally under tensile stress while in use. Therefore, when materials such as foam are used to form a shoe upper, the stress from tightening of the shoe onto the foot can cause the foam to stretch, significantly affecting the fit and performance of the shoe. Providing a middle layer 50 having a high tensile strength alleviates the problem of material deformation or elongation. Additionally, the middle layer 50 may also provide benefits such as breathability of the shoe upper 12, while maintaining the advantageous properties of the foam layers 46, 48. Optionally, middle layer 50 may be interposed between first and second layers 46, 48 throughout the entire upper 12 or throughout only a portion thereof, including instep portion 25, heel portion 18 or toe portion 20. Further, different materials for middle layer 50 can be used in different regions of upper 12. Middle layer 50 may be partly or completely interposed between the layers 46 and 50, e.g., covering some or all of the surfaces of layers 46 and 48 which face one another.

In one embodiment, middle layer 50 is composed of a textile mesh material. Such construction is further advantageous because it allows layered material 44 to be integrally formed via a compression molding process such that a fiber matrix is formed in which first layer 46 and second layer 48 extend between and fill spaces between fibers composing the mesh textile material. Such a structure greatly increases the tensile strength of the layered material 44, without reducing the overall flexibility of layered material 44. Alternative materials may be used to form middle layer 50 including leathers, non-woven fabrics and/or waterproof materials such as rubber or, more preferably, PFTE or other such waterproof, breathable membranes such as Gore-Tex® brand membranes. A combination of different materials may also be used in middle layer 50, combining properties thereof. For example, rubber and mesh can be used in combination to provide both waterproof and high-tensile properties to layered material 44. Middle layer 50 may also have multiple layers or regions of the same or different materials.

Breathability of the shoe upper 12 can be further enhanced by providing a breathable middle layer 50 for layered material 44. When such material is used for middle layer 50, it is advantageous to provide a number of ventilation windows 33 in upper 12 through both first layer 46 and second layer 48 of layered material 44. By not cutting a window in middle layer 50, the general shape of the upper is maintained due to the tensile properties of the middle layer 60. The degree of ventilation can be adjusted by the size and number of ventilation windows placed in upper 12. Such would be understood by those having reasonable skill in the art. Preferably, windows are formed from layered material by cutting out matching sections of first layer 46 and second layer 48 prior to being integrally formed into layered material with middle layer 50. Alternatively, the first and second layers do not need to match, as long as there are substantially breathable windows in each layer.

Additional features which may be incorporated into shoe 10 include a tongue and/or gusset 38, which extends along the instep portion of the wearer's foot underneath laces 31 and can be fastened to upper 12 near the metatarsal section of upper 12 at the end of the eyestay 29. Collar 36 can be affixed with or without a liner running from the heel section to the front of the ankle section. Additionally, an inner boot or bootie (not shown) can be fitted within upper 12 such that it partially or fully envelops the foot of wearer of the shoe 10, providing additional support or protection therefore. An inner boot is typically made from neoprene or similar material and may be provided within foot receiving cavity 13. A footbed (not shown) may be utilized with or without the inner boot.

In an alternative embodiment of the present invention, the layered material 44 used to form upper 12 consists essentially of two layers of material. One layer of the material 44 may be a suitable thermoformable foam material, which, as discussed above, is desirably selected to have properties and characteristics similar to those of EVA foam. The other layer of material may be any material which is suitable for middle layer 50, as discussed above, e.g., a textile mesh, non-woven fabric or a leather, but not TPU. The two layers of material can be arranged such that the foam layer is disposed adjacent to the foot receiving cavity 13 with the other layer being spaced apart therefrom and facing the outside of the shoe. Alternatively, the non-foam layer can be disposed adjacent to the foot receiving cavity with the foam layer being spaced apart therefrom and facing the outside of the shoe 10. While the layered material 44 in this embodiment is said to consist essentially of two layers, other elements may optionally be present in layered material 44, although they are not essential to the present aspect of the invention. For example, layered material 44 can include interior or exterior features 32 or partial coverings or coatings thereon.

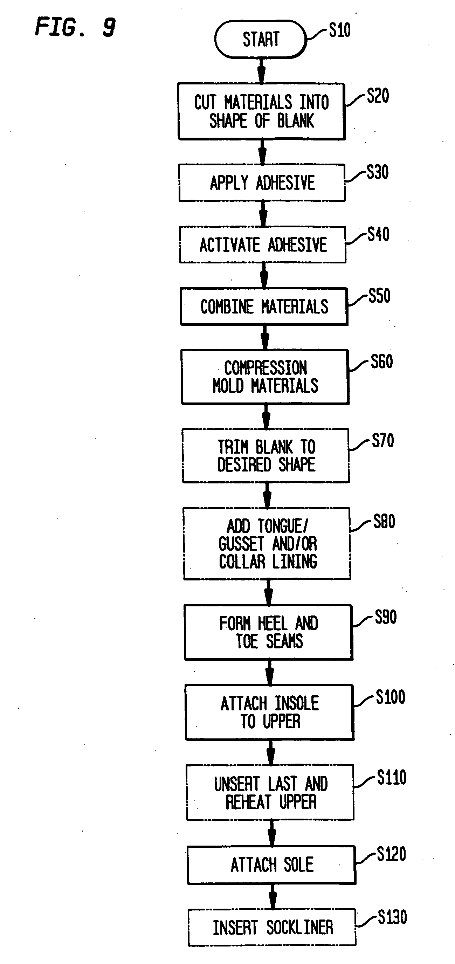

Referring now, generally, to Fig. 9, a further embodiment of the present invention includes a method for making shoe 10 having upper 12 formed of a unitary piece of layered material 44, wherein optional method steps are included in boxes having a broken line. The process begins at S10 and, as shown in S20, the materials used in forming the upper are cut into the general shape of a blank 70. An adhesive may be applied to the materials, as shown in S30. The materials are then combined in S50 into layered material 44. Layered material is then subjected to a compression molding process S50 wherein the heat and pressure from the mold activate the adhesive, cause bonding of the materials and effect compression molding of the foam layers. If necessary, in S60 blank 70 may be further trimmed to form the desired shape therefor. If a gusset or tongue 38 is to be incorporated into shoe 10, it may optionally be assembled with blank 70 in S70. Heel and toe seams 22, 24 are then formed by stitching or other processes in S80 to form blank 70 into the desired shape of upper 12. An insole 14 may be attached to upper 12, as shown in S90. In a preferred embodiment upper 12 is then attached to a lasting insole 14 by a lasting technique known to those having reasonable skill in the art as a Strobel. Slip lasting may also be employed with this type of upper construction. The shape of upper 12 can be further formed by inserting a last into the foot receiving cavity 13 and reheating the upper in S100. Optionally, in S 110 a film can be applied to upper 12. Sole 16 is then affixed to upper 12, as shown in S110. Optionally, a heel counter and/or a toe cap can be affixed to the shoe in step S120. A sockliner may be inserted into foot receiving cavity 13 in S 130.

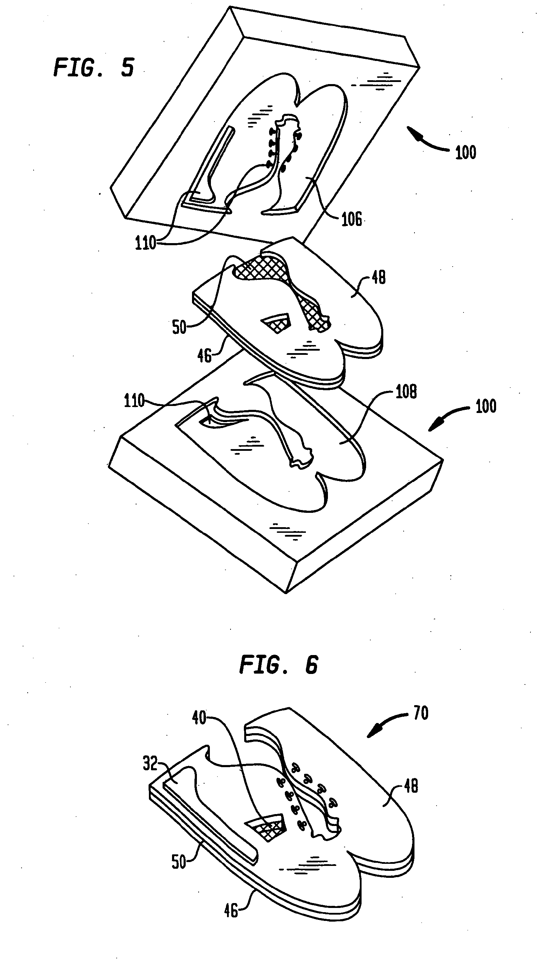

The structure of upper 12 results in upper 12 having appreciably fewer stitched or cemented areas than a typical shoe upper. A preferred embodiment of the present invention has only two stitched areas (or seams) therein, which are sewn into upper 12 to form the 3-D geometry of upper 12 from a unitary, flat piece of material referred generally herein as blank 70 (FIG. 5). Preferably, the seams included in the structure of upper 12 are located in the portion 20 and the heel portion 18 of upper 12. More preferably, toe seam 24 runs along approximately the ceneterline of upper 12 from the outer edge of the shoe to near the instep portion 25. In an alternative embodiment of upper 12, toe seam 24 extends through toe portion 20 and around the eyestay 29 for the tongue and/or gusset. This may result in an upper that is formed of two separate pieces of material rather than a single, unitary piece.

The reduced number of seams present in upper 12 results in upper 12 defining portions thereof that are substantially seamless. A preferred embodiment of upper 12, having seams only in the toe 20 and heal 18 portions, has two substantially seamless portions extending between the toe seam 24 and the heel seam 23. When referring to a portion of shoe 10 as substantially seamless, a seam is understood to be made between adjoining sections of upper 12. For example, upper 12, may be stitched or otherwise affixed along the outer edge thereof to for example, a lasting insole 14 as in strobel or strip lasting, outsole 16 when the method of attachment is, for example, stitch out, or another portion of shoe 10 along a portion of upper 12 that is nonetheless considered substantially seamless. The first substantially seamless portion runs along the medial side 28 of the upper 12, while the other substantially seamless portion runs along the lateral side 28 of the upper 12. It is beneficial to reduce the number of seams within upper 12 not only for ease of assembly and reduced production cost, but also because doing so results in a stronger, more durable upper. Alternative arrangements of seams within the design of upper 12 will result in different locations for the substantially seamless portions. For example, seams could be included in the instep 25 portion of the upper, particularly in the medial 26 and lateral 28 portions, extending from the eyestay 29 or collar 35 portions to the nearest outside edge of upper 12. Such an arrangement would result in the heel 18 and toe 20 portions being substantially seamless. Additional arrangements of seams and substantially seamless portions would be apparent to those having reasonable skill in the art upon reading this disclosure.

In a preferred embodiment of the present invention, blank 70 is formed from layered material 44, as described above with respect to steps S10-S70. While layered material 44 can be formed in a first stage as shown in steps S30-S60, and then blank 70 can be formed by cutting layered material 44 to the appropriate dimensional, step S70, it is preferred that the two are formed simultaneously by cutting the stock material layers used to form the layered material into the approximate shape for blank 70 and then compression molding the layers together. Compression molding is ideal for assembly of the individual layers into layered material 44, because it allows complex shapes to be formed into the surfaces of layered material 44, as discussed above. Further, compression molding can, in certain embodiments of the present invention, further enhance the integral forming of layered material 44, compared to conventional methods, by forming a fiber matrix from first and second foam layers 46, 48 and a mesh middle layer 50.

Preferably, the materials used to form layered material 44 are prepared separately before being combined into layered material 44. This may include cutting the individual layers 46, 48, 50 into the approximate shape desired for blank 70 as shown in step S20. An example of the desired shape for blank 70 is shown in FIG. 5 and will generally be such that it can be formed from a generally planar shape into the approximate 3-D shape of upper 12.

In the example shown in FIG. 5, the shape used for blank 70 includes a left portion 62 and a right portion 63, wherein each of the right and left portions will be bent in a generally downward direction to form medial 26 and lateral 28 sides of the shoe upper 12. The medial and lateral sides 26, 28 may or may not be symmetrical, depending upon the specific design of the article of footwear 10. The shape also has portions that, once left 62 and right 63 portions have been appropriately situated, can be bent together to form heel 23 and toe 25 portions. A section along the front end of the profile is preferably cut such that it can form toe seam 24 when the upper is shaped into a 3-D form. Further, a section is preferably cut out from the middle of the pattern that forms the shape of collar 36 and eyestay 29. The pattern to which middle layer 50 is cut can be the same as that of second and first layers, or it can optionally be uncut in middle section 37, which can be cut out after compression molding. Middle layer 50, preferably, is uncut in the middle section 37 to aid in the alignment of parts while compression molding.

First layer 46 and second layer 48 can, optionally, include features 32 preformed therein, preferably during extrusion of the stock from which first layer and second layer are cut. Alternatively, features 32 can be formed into first layer 46 and/or second layer 48 after extrusion. Such formation of features 32 could require the design of mold 100 to accommodate such features. As a further alternative, features 32 may be formed from an additional piece of foam or other material that is affixed to layered material 44 in desired portions thereof. Such features can be decorative and, thus could be refined in shape during compression molding of layered material 44, which is discussed below. Additionally, one or both of first layer 46 and second layer 48 can include a plurality of windows 42 cut out therein which are desirably located in substantially the same position in the first layer 46 and second layer 48. The materials used to form layered material 44 can be cut to the exact dimensions of the final product, step 20. Conversely, a "rough-cut" can be used to give an approximate size in length, width, and thickness of the material. The use of a rough cut is preferred because it allows the final cut, as seen in step S70, to be used to correct irregularities in alignment and ensures an edge for the visible parts of upper where all layers are aligned and allows for wider tolerance for the compression mold.

First layer 46, second layer 48, and middle layer 50 are next prepared for compression molding. It is possible that, simply compression molding the materials will not properly adhere the materials together to integrally form layered material 44. Thus, an adhesive is preferably applied before compression molding to provide additional bonding between the layers at step S30. The particular adhesive used is preferably heat activated and is used by first applying a primer to the inside surface of first layer and the inside surface 56 of second layer 48 as well as to both sides of middle layer 50. A coating of cement may then be applied to all primed areas of first layer 46, second layer 48, and middle layer 50 in step S40. The cement is preferably composed of a synthetic resin co-polymer that is heat activated, although other alternatives are known in the art, such as urethane cement. After application of the adhesive, heat is applied to the cement, thereby activating the adhesive properties thereof at step S40. The three layers are combined in step 50 such that middle layer 50 is interposed between first layer 46 and second layer 48.

The combined layers are then placed in a heated compression mold at step S60 in order to complete the integral forming of layered material 44 and for forming of any desired features 32 within or on layered material 44. The time needed for compression molding will vary with the materials and the geometry of any features to be formed, but can typically take about 7-8 minutes. A preferred embodiment of mold 100 is shown in FIG. 5, and is preferably made up of a top portion 102 and a bottom portion 104, each section preferably having a cavity 106, 108 formed therein. Alternatively, a single cavity can be included on only one of either top 102 or bottom 104 portion of mold 100. Cavities 106, 108 should be structured to provide pressure to both the second layer 48 and the first layer 46 when they are placed within mold 100. This will generally mean that cavity 106 and cavity 108 are dimensioned to form an approximate predetermined thickness for compression molded layer material 44. Accordingly, the second foam layer 48, first foam layer 46, and middle layer 50 will be selected so as to have a thickness that is greater than the predetermined thickness of the finished layered material 44 so that the three layers are compressed together when placed in mold 100. Preferably, in one example, layered material 44 has a thickness of at least about 1.5 mm after compression molding. In another example, it is preferred that layered material 44 has a thickness of no more than 15 mm after compression molding. Desirably, layered material 44 has a thickness between 2 mm and 6 mm after compression molding. To achieve this, the assembled layers will have a thickness that is greater than the desired thickness of layered material 44 after compression molding. A majority of this additional thickness will be attributable to the first and second foam layers 46, 48, the middle layer preferably having little compression set compared to the foam layers. If features 32 are to be included on the surfaces of layered material 44, the desired thickness of the features 32 should be taken into account in determining the thickness of the materials prior to molding.

Mold 100 may be configured to receive layered material 44, which may have a generally planar shape. However, as previously discussed, it may be desired to add features 32 to the second or first surface of upper 12, which can be accomplished by forming corresponding receptacles 110 into cavity 106 and cavity 108 of mold 100. The use of such receptacles 110 within mold 100 results in areas of the foam layers which are not compressed at all, or are compressed less than the majority of the layered material 44. Additionally, mold 100 can include a cavity (not shown) for forming the sole 16 of shoe 10 concurrently with the compression molding of upper 12.

Alternative variations for compression mold 100 include the use of flat plates or rolling. The flat plates used in such compression molding may have a similar structure to the outside 102 and inside portions 104 illustrated in Fig. 5, except that they need not include cavities 106 and 108, the assembled layers being placed directly on the plates. Such plates can include receptacles 110 formed therein. The rollers used in an alternative variation of the compression molding process are simply two opposed rollers having a predetermined distance therebetween. The assembled layers are first heated and then fed through the rollers, which are rotated in opposite directions to facilitate such feeding. Both of these variations provide a layered material 44 with a substantially constant cross-section. Further, both of these options allow for variation in the thickness of layered material 44, and can accommodate stock materials of varying thickness. Alternatively, non-flat rollers ban be used to add varying cross section dimensions to the layered material. Such non-flat rollers can include features 100, which would require proper alignment of the assembled layers prior to feeding.

Once the appropriate time has elapsed for compression molding of layered material 44, e.g., between seven to eight minutes, compression mold 110 is desirably placed in a cooling press (not shown) such that the resulting layered material 44 is allowed to cool and become substantially impliable. Such a process may take between 3 and 7 minutes, but will preferably take between 4 and 6 minutes. Most preferably cooling takes on the order of about 5 minutes, but will vary with the materials used, the thickness thereof, and the temperature of the mold. For example, in an embodiment of the present invention, first and second layers 46, 48 are made from EVA foam, each layer having a thickness of about 3 mm. The combined layers are placed in a compression mold at a temperature of between 145 and 165 degrees, Celsius, for between 6 and 8 minutes, which requires a cooling time of between 3 and 7 minutes, and preferably of about 5 minutes. Once the time needed for cooling has elapsed, mold 100 is removed from the cooling press and opened. Then blank 70, made of integrally formed layered material 44, is removed from compression mold 100. If necessary, the outer edges of layered material are trimmed to meet the exact guidelines of the upper pattern and to remove any defects or irregularities arising during the formation of layered material 44. The trimming step desirably includes removal of a portion of middle layer 50 from within collar portion 36 of upper 12, and may also include cutting exactly the outer perimeter of the layered material 44 in order to form blank 70.

Alternatively, mold 100 can be unheated, or "cold," meaning that the mold will be at or near the ambient air temperature. In such a variation of the process of the current invention, referred to herein as "cold molding," layered material 44 is heated prior to being placed in mold 100. Layered material can be heated in, for example, an oven or using a heat gun. Such a process is useful because it reduces cycle time and improves productivity. Another benefit is that it reduces fabric exposure to high temperatures and direct contact with a hot metal mold. With the use of cold molding, non-textile materials may be introduced into the process for variation of the material or fabric layer(s). This variation can be a benefit both functionally and aesthetically. Such benefits are also realized when using a mold in the form of rollers, as discussed above.

Optionally, other features can be added to the layered material 44 after compression molding, S 110. Such features may include coatings such as of latex paint, lacquer or polymeric film. These post-compression molding coatings can be decorative, such as by providing a color or design for the layered material, or can be functional, such as by increasing the abrasion-resistance of the layered material 44 in desired areas. Further such features can be both decorative and protective. Again, these features are preferably strategically placed on layered material 44 so as to provide the desired characteristics, without affecting the overall characteristics of shoe 10, such as breathability or flexibility.

In a preferred embodiment, additional features in the form of a material coating are applied to upper 12 by a process generally known in the art as a "cubic dipping," "water transfer," or "transfer printing." In this process, upper 12 is provided according to an embodiment of the present invention. The desired coating material is applied to a film that is specifically designed for such a process and is known in the art. Preferably, the film may be urethane based. In the example of adding a graphic, image or design to the upper, "artwork" is preprinted or applied to the dipping film. The film is then set on the surface of a water bath and prepped by smoothing film across surface of water. The film or coating material is sprayed with a solvent to activate the release of the ink design from the film. Additionally, upper 12 can be primed to further adhesion between the coating and upper 12. Upper 12 is dipped into the bath, where the film conforms to the shape of the upper due to the pressure from the water. This adheres the coating to upper 12, allowing the coating to adhere to the variant shape of upper 12 with minimal quality or cosmetic issues, such as gaps or wrinkles. The film will preferably break down in the presence of water, leaving the coating applied to upper 12. The coating is then allowed to dry on upper 12. A finishing coating, such as a lacquer to seal and protect design, may also be applied and then upper 12 can be inserted into an oven for drying.

Suitable materials for this coating process include latex paint, lacquer or ink. If ink is used, the process allows for various designs to be printed using the ink onto the film prior to application to upper 12. This allows a specific decorative design to be applied to upper 12. This decorative design can be predetermined or can be supplied by a consumer in the form of a digital image, including a JPEG image. In one embodiment, the consumer can supply the design through a specially-designed, internet-based interface, which allows the user to create custom footwear including an image which the consumer selects or provides. The user can choose from stock images displayed on the interface or may submit the consumer's own image for placement on upper 12. Additionally, the consumer could be allowed to select how the image is applied to upper 12 including image size, color and location on upper 12.

In a preferred embodiment in the present invention a liner (not shown) can be incorporated into the region of blank 70 that forms the collar 36 of the shoe 10 by, for example, stitching. Optionally, the shoe 10 can include a tongue 38 which is preferably stitched onto the end of the eyestay 29 section, extending beneath laces 31 toward collar 36. Alternatively, a gusset may be used in lieu of tongue 38.

As shown in FIG. 8, blank 70 is preferably formed into the 3-D geometry of a shoe upper 12 by stitching closed heel section 18 to form heel seam 22, and by stitching closed toe section 20 to form toe seam 24, step 90. A lasting insole may be added by stitching the bottom portion of the upper to the lasting insole, step 90. In an alternative embodiment, heel seam and toe seam are not stitched together but are rather bonded using bonding cement or other sealing means. Some types of such bonding may require overlap portions to be included in the design of the outer profile of blank 70. An insole 14, preferably in the form of a lasting insole is then stitched or otherwise affixed to the base of the shoe upper 12 such that the appropriate shoe receiving cavity 13 is formed therebetween, step 90.

In a preferred embodiment of the present invention, the 3-D shoe upper 12 formed in the previous steps, described in relation to FIG. 9, is further formed to better conform to the shape of a foot, thereby allowing a well-fitting shoe to be formed from unitary blank 70. To accomplish this, a last is inserted into upper 12, eyestay 29 may be laced closed and upper 12 reheated at step S 100 by placing the lasted upper into a heat oven at approximately 70 degrees Celsius. Because of the thermoformable properties of first foam layer 46 and second foam layer 48, heating will form the upper 12 to the shape of the last. The adhesive included in between layers of the layered material 44 will prevent the reheating of the upper 12 from causing the materials to separate. Depending on the temperature used for re-heating, it may be preferable to use a non-heat activated adhesive. Furthermore, selection of a middle layer 50 having an appropriate tensile strength will prevent stretching of the heated, plyable, inner layer 46 and second layer 48. After heating, the upper 12 is allowed to cool and the last is removed.

Once the desired shape for the shoe upper 12 is achieved, a sole unit 16 may be attached to the strobel sock 14 at step S120. This may be done by cementing or another appropriate bonding operation, which can include stitching. Sole 16 may be of any configuration, and may include an outsole, midsole and/or other components such as arch support, etc. Additionally, toe cap 34 may be affixed to toe section 20 to cover toe seam 22. In the alternative, sole 16 may extend in a generally upward direction to cover toe seam 22. Optionally, a sock liner (not shown) is inserted into the foot receiving cavity 13.

In an alternative embodiment of the present invention, shoe 10 including upper 12 and at least a portion of outsole 16 can be formed from a unitary piece of layered material 44 including at least one foam layer and at least one material layer 50. In this embodiment, a blank having a medial portion, lateral portion, and a bottom portion may be formed from the layered material in a unitary fashion. The bottom portion can be affixed to either the medial or lateral portion at an area thereof or alternatively may be attached to both portions wherein the bottom portion may be formed with a center seam, This lasting technique is commonly known as center seam slip lasting.

Although the invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the spirit and scope of the present invention as defined by the appended claims.

## Claims

1. An article of footwear, comprising an upper including:
a first foam layer having a first surface and a second surface remote from said first surface thereof;
a second foam layer having a first surface and a second surface remote from said first surface thereof; and
a middle layer having a first surface and a second surface remote from said first surface thereof;
wherein said first surface of said middle layer is affixed to said second surface of said first foam layer and said second surface of said middle layer is affixed to said first surface of said second foam layer, and said upper defines at least a portion of a foot receiving cavity for the article of footwear.

2. The upper of claim 1, wherein at least one of said first and second foam layers comprises an open-cell foam.

3. The upper of claim 1, wherein at least one of said first and second foam layers comprises a thermoformable foam.

4. The upper of claim 3, wherein at least one of said first and second foam layers comprises a thermoset foam.

5. The upper of claim 3, wherein at least one of said first and second foam layers comprises a thermoplastic foam.

6. The upper of claim 5, wherein said thermoplastic foam is an EVA foam.

7. The upper of claim 1, wherein said first foam layer further includes a feature affixed to said first surface thereof.

8. The upper of claim 7, wherein said feature is a protective feature and is located in a toe region of said upper.

9. The upper of claim 7, wherein said feature is a supportive feature and is located in an ankle region of said upper.

10. The upper of claim 9, wherein said feature is integrally formed with said first foam layer.

11. The upper of claim 8, wherein said feature comprises a coating applied to at least a portion of said first surface of said first foam layer.

12. The upper of claim 11, wherein said coating comprises a latex paint.

13. The upper of claim 11, wherein said coating comprises a lacquer.

14. The upper of claim 1, wherein:
said first foam layer, said second foam layer, and said middle layer form a unitary piece of layered material having a first seam and a second seam;
said unitary piece of layered material defines a first substantially seamless portion on a medial side of said upper between said first seam and said second seam; and
wherein said upper defines a second substantially seamless portion on a lateral side of said upper between said first seam and said second seam.

15. The upper of claim 14, wherein said first seam is positioned at a heal section of said upper, and wherein said second seam is positioned at a toe section of said upper.

16. An article of footwear comprising:
a sole; and
a unitary upper affixed to said sole and formed of a layered material having:
a first foam layer;
a second foam layer; and
a middle layer interposed between said first and second foam layers, said upper defining at least a portion of a foot-receiving cavity of said article of footwear.

17. The article of claim 16, wherein said middle layer is adhesively affixed between said first and second foam layers.

18. The article of claim 16, wherein said middle layer is a mesh textile material.

19. The article of claim 16, wherein said first and second foam layers each comprise a thermoformable foam.

20. The article of claim 19, wherein said thermoformable foam is a thermoplastic foam.

21. The article of claim 20, wherein said thermoplastic foam is an EVA foam.

22. The article of claim 21, wherein said EVA foam comprises an open-cell foam.

23. The article of claim 19, wherein said thermoformable foam comprises a polyester foam.

24. The article of claim 19, wherein said thermoformable foam comprises a polyether foam.

25. The article of claim 19, wherein said thermoformable foam comprises a latex foam.

26. A method for making an article of footwear, comprising:
providing a first foam layer, a second foam layer and a middle layer and integrally forming said first foam layer, said second foam layer and said middle layer by interposing said middle layer between said first foam layer and said second foam layer to form a blank defining a profile having first and second mating portions; and
forming an upper defining a portion of a foot receiving cavity from said blank by aligning said first and second mating portions.

27. The method of claim 26, wherein integrally forming said first foam layer, second foam layer and middle layer includes compression molding said first and second foam layers and said middle layer together.

28. The method of claim 27, wherein said compression molding includes the use of a mold, said mold being used to form a sole for said article of footwear concurrently with said integrally forming said first foam layer, second foam layer and middle layer.

29. The method of claim 27, wherein integrally forming said first foam layer, second foam layer and middle layer further includes adhesively affixing said middle layer between said first foam layer and said second foam layer.

30. The method of claim 26, wherein said integrally forming said first foam layer, second foam layer and middle layer includes cold molding of the first and second foam layers and the middle layer.

31. The method of claim 30, wherein said cold molding includes using rollers.

32. The method of claim 31, wherein said cold molding includes using plates, said plates being substantially flat.

33. The method of claim 26, further including trimming said layered material to form a blank.

34. The method of claim 26, further including applying a coating to said first surface of said first foam layer after said step of compression molding.

35. The method of claim 26 further including forming a first seam from said first mating portion, and forming a second seam from said second mating portion.

36. The method of claim 26 further including:
affixing an insole to said upper at an outside edge thereof so as to define a foot receiving cavity therebetween;
inserting a last into said foot receiving cavity;
heating said upper so as to form said upper to a shape of said last;
allowing said upper to cool; and
removing said last from said foot receiving cavity.

37. An article of footwear having a unitary upper formed from a layered material, and a sole, said upper forming at least a portion of a foot receiving cavity of said article of footwear, and said sole being affixed to said upper, said article of footwear being formed by the process of:
providing a first foam layer, a second foam layer and a middle layer and integrally forming said first foam layer, said second foam layer and said middle layer by interposing said middle layer between said first foam layer and said second foam layer to form a blank defining a profile having first and second mating portions; and
forming said upper from said blank by forming first and second seams from said first and second mating portions; and
affixing said sole to said upper.

38. The article of claim 37, wherein integrally forming said first foam layer, second foam layer and middle layer includes compression molding of the first and second foam layers and the middle layer.

39. The article of claim 38, wherein said middle layer is formed of a textile material defining a plurality of open portions such that said process step of compression molding forces said first foam layer and said second foam layer into mutual contact within said open portions so as provide tensile strength to said layered material.

40. The article of claim 39, wherein said process step of integrally forming said first foam layer, second foam layer and middle layer includes adhesively affixing said middle layer between said first foam layer and said second foam layer.

41. The article of claim 40, wherein said process step of adhesively affixing includes applying a heat-activated adhesive to a surface of said middle layer and applying heat thereto.

42. An article of footwear comprising:
a sole; and
a unitary upper affixed to said sole so as to define a foot receiving cavity therein, said unitary upper being formed of a layered material consisting essentially of:
a first layer of a thermoformable foam and having a first surface and a second surface remote from said first surface thereof; and
a second layer having a first surface and a second surface remote from said first surface thereof;
wherein said second surface of said first layer is affixed to said first surface of said second layer, said upper defining at least a portion of a foot-receiving cavity.

43. The article of claim 42, wherein said second layer is a textile material.

44. The article of claim 43, wherein said first surface of said first layer is disposed toward said foot receiving cavity such that said second surface of said second layer is spaced apart from said foot receiving cavity.

45. The article of claim 42 wherein said first layer further includes a feature affixed to said first surface thereof.

46. The upper of claim 45, wherein said feature is integrally formed with said first foam layer.

47. An article of footwear comprising:
an upper; and
a bottom affixed to said upper;
wherein said upper and said bottom are formed from a unitary piece of layered material including:
a first layer of thermoformable foam having a first surface and a second surface remote from said first surface thereof; and
a second layer having a first surface and a second surface remote from said first surface thereof;
said second surface of said first layer being affixed to said first surface of said second layer.

48. The article of claim 47, wherein said second layer includes a first region and a second region, said first region comprising a first material and said second region comprising a second material.

49. The article of claim 48, wherein said first material is a rubber and said second material is a textile.
